Europäisches Patentamt

European Patent Office

Office européen des brevets

(19)

(11) Publication number: **0 264 236**
**A2**

(12) # EUROPEAN PATENT APPLICATION

(21) Application number: **87308958.5**

(22) Date of filing: **09.10.87**

(51) Int. Cl.⁴: **G01N 11/14**

(30) Priority: **10.10.86 US 917619**
**24.08.87 US 88404**

(43) Date of publication of application:
**20.04.88 Bulletin 88/16**

(84) Designated Contracting States:
**AT BE CH DE ES FR GB GR IT LI LU NL SE**

(71) Applicant: **Haake-Buchler, Inc.**
**244 Saddle River Road**
**Saddle Brook New Jersey 07762(US)**

(72) Inventor: **November, Daniel**
**82-11 Greenfell St. Kew Gardens**
**Queens 11415 New York(US)**
Inventor: **Darnopuk, Harry**
**1658 East 23rd Street**
**Brooklyn New York 11229(US)**
Inventor: **Hectus, George V.**
**31 Newman Avenue**
**Verona 07044 New Jersey(US)**

(74) Representative: **Baillie, Iain Cameron**
**c/o Ladas & Parry Isartorplatz 5**
**D-8000 München 2(DE)**

(54) **Method for testing repeatability of a rheologic system.**

(57) A method for testing the repeatability of the output of a rheologic instrument. Such instrument will, typically, include a power shaft (10) and a test chamber (12). The disclosed method constitutes the step of using a torque transducer (14) to reiteratively compare the reactive torques imparted to power shaft through the use of sequences of rheologic references.

Fig.1

## METHOD OF TESTING REPEATABILITY OF A RHEOLOGIC SYSTEM

This invention relates to a method of testing repeatability of a rheologic system.

Many analytical laboratory instruments make use of a propellor and power shaft to generate internal pressures, densities, torques and forces, all of which, directly or indirectly influence the viscosity of the liquid phase of the test material. Examples of this type of physical phenomenon which may be measured or determined through rheological measuring procedures are the following: flow rate of polymers, surface properties, air bubble entrapment, fiber wet-out, and structural integrity of the test sample.

The present inventive method makes usage of a strain transducer. Strain transducers, as such, have long been known in the prior art. However, their usage in the method as set forth herein is believed to be novel.

The most related prior art of which the invention are aware comprises U.S. Patent No. 3,285,057(1966) to DeZurik; No. 4,171,647(1979) to Herregen; No. 4,445,365 to Jelby; and United Kingdom Patent No. 1,181,961(1970) to Brooking.

The above and other prior art is not capable of measuring or responding to all components which are torsionally imparted to the power shaft within the test vessel. More particularly, the prior art does not teach a test method which measures or utilizes both the radial and axial components of torque in the test vessel.

It is an object of the present invention to provide a method and means for testing the repeatability of the output of a rheological measurement instrument.

The present invention comprises a method for testing the repeatability of the output of a rheological instrument, said instrument having a power shaft and a test chamber. The method comprises the step of using a circumferentially oriented torque transducer to re-iteratively compare the reactive torque imparted to said power shaft by use of rheological reference samples and comparing the reactive torques thereof. Differences between reactive torques from identical reference samples will indicate a need to appropriately calibrate the test instrument before field usage thereof is made.

The method according to the present invention preferably provides a method and means for simply, conveniently, and cost-effectively determining the repeatability and, thereby, correctness of calibration of a test instrument employing a power shaft as an element thereof.

Preferably, the method according to the present invention for testing the repeatability of the output of instruments is employed in measuring the viscosity of the liquid phase of normally solid materials such as polymers.

Conveniently, there is provided quality control for the testing of analytic instruments prior to their use in an applied engineering environment, such as an extrusion system.

The present invention will now be described by way of example with reference to the accompanying drawings, in which:

Fig. 1. is a diagrammatic exploded view of the inventive system and its related environment.

Fig. 2 is a perspective view of the exterior of the test system.

Fig. 3 is a cross-sectional partial break-away view of the decoupling interface of the shaft linkage.

Fig. 4 is an isolated view of the female hub of the strain guage shaft.

It is well known in the prior art to make use of so-called torque rheometers (which may be subject to microprocessor control) to measure the rheological properties of the liquid phase of a resin, such properties including, for example, viscosity, material uniformity and air bubble entrapment. However, in such rheologic measuring systems, it is most important to insure repeatability of the test data when the same resins, or other test materials, are provided to mixing apparatus 8 and its test chambers 12 under similar conditions of torque from power shaft 10, temperature, pressure within the test chamber 12, and other variables that are a part of the "recipe" in the preparation of a resin or the like prior to an extrusion, injection molding or other processes.

Accordingly, it is of considerable importance to insure that the rheological measuring equipment is working in a precisely repeatable fashion before use thereof is made. In this sense, the present inventive method may be viewed as a method for testing or calibrating an analytic test system.

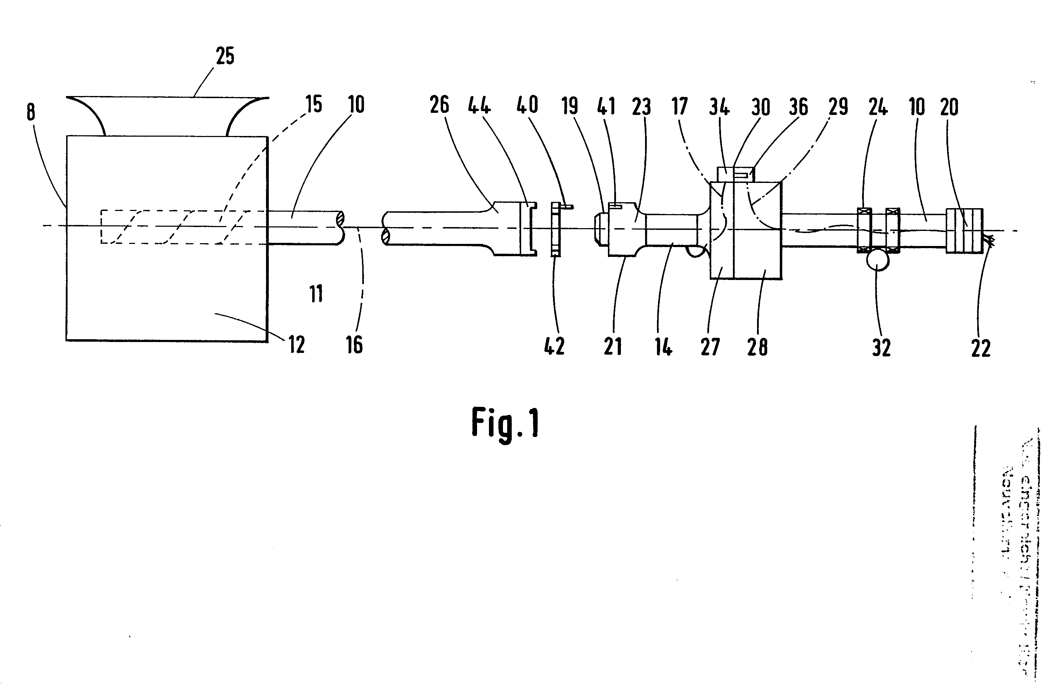

With reference to Fig. 1 and, more particularly, the left-hand side thereof, there is shown the mixing apparatus 8 which includes the test chamber 12, a hopper 25, the power shaft 10, and a spiral mixing element 15 by which resin pellet or other test materials are selectively dropped into hopper 25 for purposes of mixing within test chamber 12 by virtue of the rotation of the said mixing element.

Typically, such mixing occurs at a pre-determined temperature and is subject to a pre-determined torque from power shaft 10. This torque may be considered in terms of axial and radial components which are imparted to the lattice structure of the material placed into chamber 12. In many applications, said pellets are elevated in temperature such that the resin, or other test material, is in its liquid phase during the interval of rotation of power shaft 10 and the mixing element 15.

With further reference to Fig. 1, it is to be appreciated that the use of the spiral (or screw-like) mixing element 15 accomplishes, by virtue of its special geometry, a summing of the axial and radial components of the reactive torque imparted from the test material. This reactive torque is then torsionally transmitted through said power shaft 10 to a spirally-wound transducer 14 (further described below).

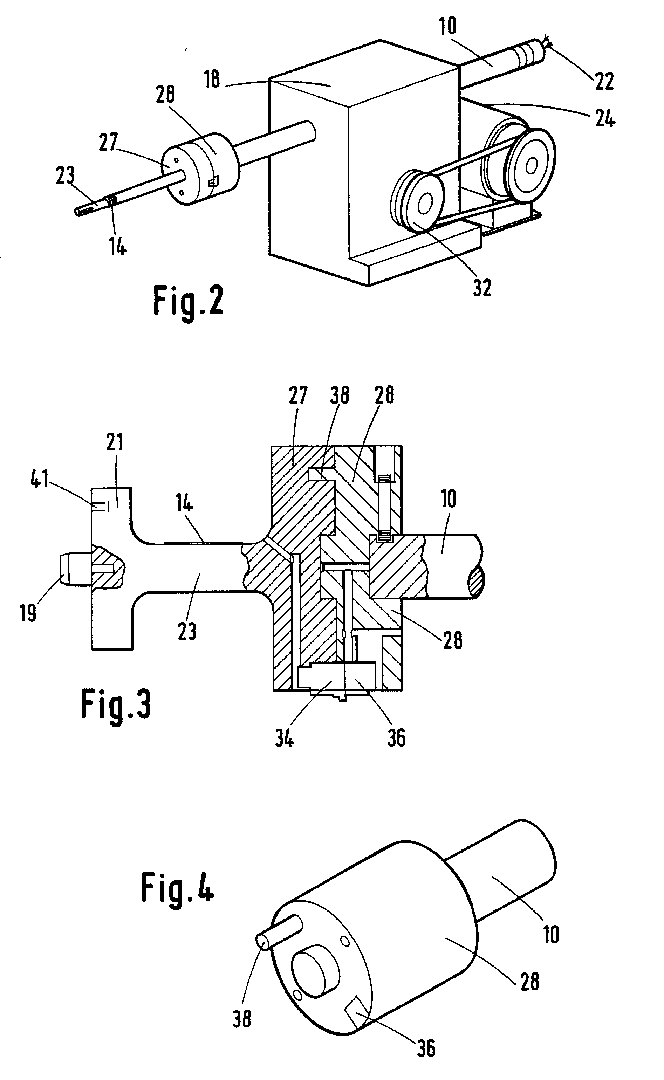

In Fig. 1, power shaft 10 is provided with an output coupling 26. To said output coupling 26, and in alignment with the axis of rotation 16 of power shaft 10, is provided a driver coupling plate 44. This element is, in turn, mechanically mated to a driver coupling plate 42 which includes a shear pin 40. Said coupling plate 42 is axially secured to male element 21 through key 19 and shear pinhole 41 (See also Fig. 3). Male element 21 is integral with linkage 23 about which is spirally wound said transducer means 14 which, in a preferred embodiment, is a torsional strain gauge in the nature of a piezoelectric element. A piezoelectric element, by definition, generates an analog electrical output as a direct and, within a given range, linear output of an input of mechanical pressure. In the instant application, the input is in the nature of spiral torque torsionally imparted to transducer 14 from spiral mixing element 15 through the rotation of power shaft 10 in test chamber 12.

The positioning of transducer 14, in the manner shown in Figs. 1 and 3, is significant in that it will serve to measure the integrated total of the axial and radial components of reactive torque from the test sample imparted to the mixing element 15 and power shaft 10. Thereby, when the output of the transducer 14 is compared with respective rheologic reference material samples, an accurate determination can be made as to whether a large microprocessor-controlled torque rheometer system is operating properly. In effect, the present method of testing the output of the rheologic measuring instrument comprises a quality-control, calibration, and self-check means through which variations of floats in measurements from the microprocessor system can be ascertained before any production use of the material mixed within chamber 12 is made.

In that the geometry of the wounding of strain gauge transducer 14 follows the general spiral geometry of mixing element 15, both the axial and radial components of the reactive torques from the test material are faithfully measured.

With further regard to Figs. 1 and 3, it is seen that the transducer 14 is electrically connected by wire 17 to analog-to-digital connector/convertor 30. Thereafter, the converter digital signal passes, by wire 29, thru the power shaft 10, through slip rings 20, and to voltage output 22 of the system.

The central mechanical interface of the system is shown in Figs. 3 and 4 in which linkage 23 is seen to connect to a male output hub 27 associated with the transducer 14 and its linkage 23. Therein, male hub 27 mates with female hub 28 through driving pin 38. Further shown at the connection between hubs 27 and 28 are respective male and female electrical fuses 34 and 36, the function of which is to generate an abort or interrupt signal to the system if the transducer 14 senses an excessive output across connector 30.

An analogous mechanical function is served by the co-action of shear pin 40 and hole 41 (See Fig. 1) in which any torque overloads developed in the operation of test chamber 12 will cause pin 40 to shear, thereby de-coupling the transducer from the test chamber at the interface between element 21 and driver coupling plate 42.

The present invention is to be understood as a method for testing the repeatability of an output of a rheological measuring system. In concept, the method comprises the step of using the torque transducer 14 to re-iteratively compare the reactive torques imparted to said power shaft through the use of the respective rheological reference material samples and then comparing the reactive torques thereof. Thereby, differences in the comparative reactive torques measured by said torque transducer will indicate, if such is the case, any lack of repeatability in sequential outputs of the rheological measuring system.

When viewed more particularly, the inventive method may be seen as comprising the steps of mechanically coupling said transducer 14, exteriorly of said test chambers, to a point on the axis of rotation 16 of power shaft 10. Thereafter, test chamber 12 is filled with the sample material of a pre-defined quantity and rheological characteristic, while maintaining the same material at a pre-determined temperature. As a further step, the system is operated for a fixed duration. Thereafter, the digital output of transducer 14 is measured and recorded.

As a yet further step, test chamber 12 must be completely emptied and cleaned. Thereafter, and prior to the next contemplated usage of a "recipe" employing said sample material, the said steps of operating the system for a fixed period of time, and measuring and recording the electrical output of said transducer are repeated. Thereafter, data generated by said repetition step and the first taking of the same data are compared. Thereby, differences in measurements recorded between the recorded torque outputs of the same rheologic reference samples will indicate the existence or absence of repeatability of the rheological measurement system. If lack of repeatability is found, there will, of course, be a need for recalibration of the test system. Further, external testing of the transducer is desirable for purposes of completeness.

In Fig. 2, the rest of the system is shown - schematically. This includes male and female hubs 27 and 28 which are operated by the gear box 18 which, in turn, is powered by right angle wormdrive 32 and AC motor 24.

While there has been herein shown and described the preferred embodiments of the present invention, it is to be understood the invention may be embodied otherwise than is herein illustrated and described and that in said embodiments, certain changes in the details of construction, and in the form and arrangement of parts may be made without departing from the underlying idea or principles of this invention within the scope of the appended claims.

**Claims**

1. A method for testing the repeatability of an output of a rheological measuring system, said system having a power shaft (10) and a test chamber (12), the method comprising the steps of:

(a) providing a circumferential mixing element for said power shaft in said test chamber; and

(b) using a spirally oriented transducer (14) to re-iteratively compare the integrated axial and radial reactive torques arranged to be imparted to said mixing element through the use of rheologic reference material samples and comparing the reactive torques thereof, whereby differences in the comparative reactive torques measured by said torque transducer (14) indicate any lack of repeatability in the sequential outputs of said rheological measuring system.

2. A method as claimed in claim 1, characterised in Step (a) more particularly comprises the step of: torsionally coupling said transducer (14) to the axis of rotation of said power shaft (10).

3. A method as claimed in claim 1 or 2, characterised in that Step (a) more particularly comprises: orienting said transducer (14) within a curved plane of rotation of said power shaft (10) corresponding to the curvature of said mixing element of said power shaft; whereby reactive torques, both axial and radial, will be transmitted through the power shaft to said transducer.

4. A method as claimed in claim 3, characterised in providing override means (40,41) for decoupling the power shaft in the event of mechanical or electrical overloads developed in operation of the test chamber.

5. A method as claimed in claim 3, characterised in the steps of:

(a) filling of said test chamber with a material having a pre-defined quantity and rheologic characteristic, and maintaining said material at a predetermined temperature;

(b) operating the said system for a fixed period of time; (c) measuring and recording the electrical output of said strain transducer;

(d) emptying and cleaning said test chamber of said system;

(e) repeating said Steps (a) through (c) above; and

(f) comparing the measurement data generated by said Steps (c) and (e) above, whereby differences in measurements of the reactive torque outputs of the said rheologic references samples will indicate any absence of repeatability in the system and, thereby, the need for a re-calibration of the test system.

6. A system for testing the repeatability of rheological measurements, said system comprising:

(a) a test chamber (12);

(b) a power shaft (10) extending into said test chamber;

(c) a circumferential mixing element (15) secured to said pwoer shaft in said test chamber; and

(d) a spirally oriented transducer (14) secured to said power shaft, outside of said mixing chamber, said transducer comprising means for re-iteratively comparing the integrated axial and radial reactive torques imparted to said mixing element through the re-iterative use of rheologic reference material samples and the comparing of the reactive torques thereof.

whereby differences in the comparative reactive torques measured by torques measured by said torque transducer will indicate any lack of repeatability in sequential outputs of said rheological measuring system.

7. A system as claimed in claim 6, characterised in that said transducer (14) is torsionally coupled to the axis rotation of said power shaft (10).

8. A system as claimed in claim 6, characterised in that said transducer is oriented within a curved plane of rotation of said power shaft (10) corresponding to the curvature of said mixing element (15) of said power shaft, whereby reactive torques, both axial and radial, from said power shaft to said transducer (14).

9. A system as claimed in claim 8, characterised in means (40, 41) for providing an override to de-couple said power shaft (10) in the event of mechanical or electrical overloads developed in the operation of said test chamber (11).

Fig. 1

Fig.2

Fig.3

Fig.4